# FASCICULE DE BREVET EUROPEEN

(11) **EP 4 449 067 B1**
(45) Date de publication et mention de la délivrance du brevet: **03.09.2025**
(21) Numéro de dépôt: 22847549.7
(22) Date de dépôt: 15.12.2022
(51) Int. Cl.: G01F 11/06, G01F 11/28, B05B 11/02, B05B 11/04

(54) **DISTRIBUTEUR DE PRODUIT FLUIDE**
SPENDER FÜR FLÜSSIGE PRODUKTE
FLUID PRODUCT DISPENSER

(30) Priorité: 17.12.2021 FR 2113827
(43) Date de publication de la demande: 23.10.2024
(73) Titulaire: APTAR France SAS, 27110 Le Neubourg (FR)
(72) Inventeur: BILQUEZ, Sébastien, 27810 Marcilly-sur- Eure (FR)
(74) Mandataire: CAPRI
(86) Numéro de dépôt international: PCT/FR2022/052367
(87) Numéro de publication internationale: WO 2023/111462

(56) Documents cités:
- EP-A1- 3 315 922
- EP-A1- 3 315 923
- DE-A1- 102014 206 568
- US-A1- 2021 278 264
- US-B2- 10 071 836
- US-B2- 10 471 452
- US-B2- 8 851 333

## Description

La présente invention concerne un distributeur de produit fluide comprenant un réservoir sur lequel est monté un dispositif doseur de fluide, liquide à pâteux, d'un type particulier, décrit par exemple dans le document EP2746733. Ce dispositif doseur est généralement associé à un réservoir de fluide, qui est écrasable manuellement, afin de refouler le fluide à travers le dispositif doseur. En variante, le fluide peut aussi s'écouler par la seule gravité à travers le dispositif doseur.

Le dispositif doseur du document EP2746733 comprend une chambre définissant une entrée, une butée, une sortie et un siège d'étanchéité, la butée étant séparée du siège d'étanchéité par une distance de course. Le dispositif doseur comprend également un obturateur, qui peut être une bille flottante, déplaçable dans la chambre sur une course définie entre une position de repos, dans laquelle l'obturateur est sollicité par une force de rappel (différentiel de densité entre le fluide et l'obturateur et/ou ressort) vers la butée, et une position extrême, dans laquelle l'obturateur est sélectivement entrainé vers le siège d'étanchéité à l'encontre de la force de rappel par le fluide circulant dans la chambre de l'entrée vers la sortie.

En d'autres termes, l'obturateur est prisonnier de la chambre, mais peut s'y déplacer axialement entre la butée et le siège d'étanchéité sous les actions antagonistes de la force de rappel et du flux de fluide qui se dirige vers la sortie. Ainsi, lorsqu'un utilisateur écrase le réservoir, un flux de fluide est dirigé vers la sortie et comme ce flux de fluide traverse la chambre, il entraine avec lui l'obturateur sur une course qui se termine lorsqu'il vient en contact étanche sur le siège. Le flux de fluide est alors brusquement stoppé : la quantité de fluide distribué correspondant à une dose préalablement définie.

Dans l'art antérieur, on connait les documents EP3315922A1, US2021278264A1, US10071836B2, US10471452B2, US8851333B2 et DE102014206568A1, qui décrivent tous des distributeurs intégrant des dispositifs doseurs qui sont pourvus de moyens de réglage aptes à modifier la course de l'obturateur. Ces moyens de réglage comprennent tous un filetage et un organe d'actionnement rotatif externe, que l'utilisateur peut manipuler, en le tournant. Ainsi, la course de l'obturateur peut certes être modifiée, et de manière répétée, mais la dose de produit fluide n'est pas ajustée en fonction du produit fluide.

En effet, la dose de fluide est dépendante de nombreux paramètres et notamment des caractéristiques du fluide, comme sa viscosité ou sa tension de surface. Son écoulement dépend également de la configuration du dispositif doseur, mais pour une conception donnée de dispositif doseur, seules les caractéristiques du fluide entrent en jeu. Ainsi, un dispositif doseur peut très bien être adapté à un type bien précis de fluide et être inadapté pour un autre. Par conséquent, il faut adapter au cas par cas les dispositifs doseurs pour chaque type de fluide. Cela n'est pas possible avec les distributeurs des documents précités, car c'est l'utilisateur qui fait varier la course de l'obturateur selon son envie et non pas en fonction des caractéristiques du produit fluide.

La présente invention a pour but de remédier à cet inconvénient de l'art antérieur en proposant des moyens de réglage qui sont manipulés une seule fois en usine avant le montage définitif du distributeur en fonction des caractéristiques du produit fluide.

Pour ce faire, la présente invention propose un distributeur de produit comprenant un réservoir sur lequel est monté un dispositif doseur comprenant une chambre définissant une entrée, une butée, une sortie et un siège d'étanchéité, la butée étant séparée du siège d'étanchéité par une distance de course, et un obturateur déplaçable dans la chambre sur une course définie entre une position de repos, dans laquelle l'obturateur est sollicité par une force de rappel vers la butée, et une position extrême, dans laquelle l'obturateur est sélectivement entrainé vers le siège d'étanchéité à l'encontre de la force de rappel par le fluide circulant dans la chambre de l'entrée vers la sortie, le distributeur doseur comprend des moyens de réglage de la course de l'obturateur aptes à ajuster la distance de course séparant la butée du siège d'étanchéité, caractérisé en ce que les moyens de réglage sont situés à l'intérieur du distributeur, et plus particulièrement à l'intérieur du réservoir de fluide, de sorte qu'ils sont inaccessibles de l'extérieur du distributeur de produit fluide. Ainsi, l'invention propose de confiner les moyens de réglage à l'intérieur du distributeur, de sorte qu'un utilisateur ne puisse pas les manipuler. On peut aussi dire que les moyens de réglage sont entièrement disposés dans le distributeur, en particulier dans le réservoir, sans aucune partie des moyens de réglage débouchant sur l'extérieur du distributeur.

Avantageusement, la chambre peut être formée par au moins deux pièces rapportées l'une sur l'autre et définissant entre elles plusieurs positions d'assemblage possibles correspondant à des distances de course différentes.

Selon un premier mode de réalisation de l'invention, la chambre peut comprendre une cage formant l'entrée et la butée, et une tête formant la sortie, la cage étant solidaire de la tête. Avantageusement, la cage peut comprendre un corps de cage et une coiffe de cage, le corps et la coiffe définissant entre eux plusieurs positions d'assemblage possibles correspondant à des distances de course différentes. Le corps peut former des crans d'encliquetage et la coiffe peut former des dents d'encliquetage aptes à venir en prise encliquetée avec les crans d'encliquetage. En variante, le corps peut former un filetage et la coiffe peut former des filets aptes à venir en prise filetée avec le filetage. Les crans et dents sont préférés, car leur positionnement mutuel est figé et définitif, une fois de distributeur assemblé. Ce n'est pas le cas du filetage et des filets, dont le positionnement mutuel pourrait bouger dans le temps, par exemple sous l'action de chocs ou du flux de produit fluide. Les crans et dents, ou plus généralement l'encliquetage, offre(nt) donc une pérennité par rapport aux filetage et filets.

Avantageusement, le corps de cage et la coiffe de cage sont réalisés de manière monobloc avec des ponts de matière sécables. La coiffe peut former la butée. Le corps et la tête peuvent être réalisés de manière monobloc.

Selon un deuxième mode de réalisation de l'invention, la cage et la tête peuvent définir entre elles plusieurs positions d'assemblage possibles correspondant à des distances de course différentes.

Selon une autre caractéristique de l'invention, le dispositif doseur peut comprendre une bague qui forme le siège d'étanchéité. Dans le deuxième mode de réalisation, la cage et la bague peuvent définir entre elles plusieurs positions d'assemblage possibles correspondant à des distances de course différentes.

On peut considérer que la bague fait partie de la cage ou de la tête.

Selon un autre aspect de l'invention, le dispositif doseur peut en outre comprendre une valve à fente, maintenue en place par la cage qui forme avantageusement le siège d'étanchéité ou par une bague qui forme avantageusement le siège d'étanchéité. La position de la valve à fente, par rapport à la position basse de l'obturateur, peut aussi être définie pour créer un mouvement mécanique lors du retour d'aspiration, et ainsi provoquer le décollement de la bille, qui dans certaines conditions (nature du fluide), peut avoir tendance à rester collé sur le siège d'étanchéité et ainsi bloquer le dispositif doseur.

Selon un troisième mode de réalisation de l'invention, la butée de la chambre peut être formée avec au moins une amorce de rupture, au niveau de laquelle la butée peut être cassée, permettant ainsi d'augmenter la distance de course. En variante, à la place de casser un segment de la butée, on peut envisager de le replier tout en restant attaché. Le résultat est le même, à savoir augmenter la distance de course.

Ainsi, le dispositif doseur peut intégrer une ou plusieurs des caractéristiques suivantes :
- Coiffe encliquetée ou vissée sur le corps de cage,
- Butée monobloc avec le corps de cage,
- Corps de cage et coiffe de cage monobloc avec ponts cassants,
- Corps de cage encliqueté ou vissé dans la bague,
- Siège d'étanchéité formé par la cage ou la bague,
- Valve à fente maintenue par la cage ou la bague,
- Butée sécable seule ou combinée à l'encliquetage ou le vissage.

L'esprit de la présente invention repose sur le fait de pouvoir ajuster la distance de course du dispositif doseur avant assemblage du distributeur, en utilisant des techniques connues, telles que l'encliquetage, le vissage, la rupture ou le pliage.

L'invention sera maintenant plus amplement décrite en référence aux dessins joints, donnant à titre d'exemples non limitatifs, plusieurs modes de réalisation de l'invention.

Sur les figures :
La figure 1 est une vue en perspective éclatée d'un dispositif doseur de fluide selon un mode de réalisation de l'invention,
La figure 2 est une vue en perspective d'un distributeur de produit fluide comprenant un dispositif doseur de l'invention prêt à être monté sur un réservoir de fluide,
La figure 3 est une vue en coupe transversale verticale à travers le dispositif doseur de la figure 1 à l'état monté,
La figure 4 est une vue en perspective agrandie de la partie supérieure du dispositif doseur de la figure 3,
Les figures 5 et 6 montrent le dispositif doseur de la figure 3 dans deux configurations différentes,
La figure 7 est une vue en coupe transversale verticale à travers un dispositif doseur selon un deuxième mode de réalisation de l'invention,
La figure 8 est une vue en coupe transversale verticale à travers un dispositif doseur selon un troisième mode de réalisation de l'invention, et
La figure 9 est une vue en coupe transversale verticale à travers un dispositif doseur selon un quatrième mode de réalisation de l'invention.

Le distributeur de produit fluide de l'invention, quel que soit le mode de réalisation, comprend un réservoir de produit fluide R sur lequel est monté un dispositif doseur de l'invention.

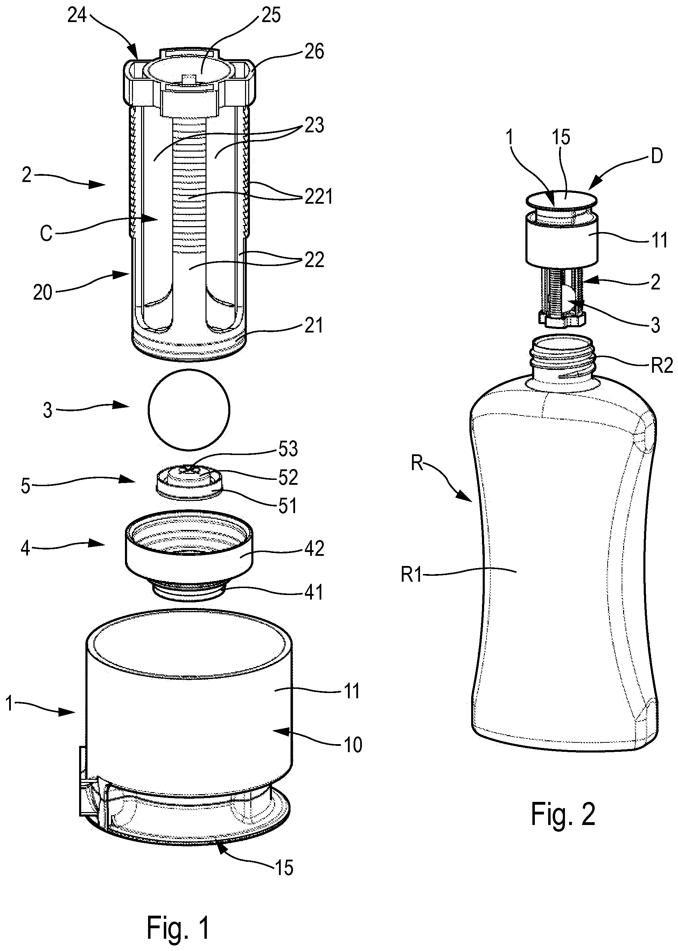

On se référera tout d'abord à la figure 1 pour décrire les différents éléments constitutifs du dispositif doseur de fluide D selon le premier mode de réalisation de l'invention. Tous les éléments constitutifs du dispositif doseur peuvent être réalisés par injection/moulage de matière plastique appropriée.

Le dispositif doseur comprend une tête 1, une cage 2, un obturateur 3 sous la forme d'une bille, une bague 4 et une valve ou clapet à fente 5. La bague 4 est reçue fixement dans la tête 1 et la cage 2 est montée dans la bague 4 en coinçant entre elles la valve à fente 5 et en emprisonnant l'obturateur 3 à l'intérieur de la cage 2. La bague 4 peut être encliquetée dans la tête 1 et la cage 2 peut être encliquetée dans la bague 4. La bague 4 peut être considérée comme faisant partie de la tête 1 ou de la cage 2, étant donné que la bague 4 est la pièce intermédiaire entre la cage 2 et la tête 1.

Ainsi, la bague 4 comprend un talon de montage 41 qui vient en prise avec la tête 1 et une coupelle de montage 42, dans laquelle la cage 2 est reçue fixement. De préférence, le talon de montage 41 est encliqueté dans la tête 1 et la cage 2 est encliquetée dans la coupelle 42.

La cage 2 comprend un corps de cage 20, auquel est associée une coiffe 24, susceptible d'être montée à des hauteurs différentes sur le corps de cage 20. Le corps de cage 20 et la coiffe de cage 24 forment ensemble des moyens de réglage de la course de l'obturateur 3 : la coiffe 24 formant un organe mobile des moyens de réglage et le corps de cage 24 formant un organe fixe des moyens de réglage.

Le corps de cage 20 comprend une embase de montage 21 de forme annulaire, qui est destinée à être reçue de manière fixe dans la collerette 42 de la bague 4, par exemple par encliquetage. A partir de cette embase 21 s'étendent quatre pattes 22 qui sont extérieurement pourvues de crans d'encliquetage 221, qui s'étendent horizontalement les uns en dessous des autres sur une partie de la hauteur des pattes 22. On peut également dire que les crans 221 s'étendent perpendiculairement à l'axe longitudinal du corps de la cage 2 défini par les pattes 22. Les pattes 22 sont ici au nombre de quatre, séparées par des fentes longitudinales axiales 23. Les pattes 22 présentent des extrémités supérieures libres : en d'autres termes, elles ne se rejoignent pas au niveau de leur partie supérieure.

La coiffe 24, qui fait partie de la cage 2, est montée sur les extrémités libres des pattes 22 et comprend quatre passants 26 destinés au passage respectif des quatre pattes 22. La coopération entre la coiffe 24 et le corps de cage 20 sera décrit plus en détail ci-après.

L'obturateur 3 se présente ici sous la forme d'une bille, qui est avantageusement réalisée de manière à avoir une densité plus faible que celle du liquide à distribuer. La bille 3 peut par exemple être creuse et réalisée en une matière plastique appropriée. Elle peut être formée par la jonction de deux demi-sphères. A la place de cette bille, on peut imaginer d'autres formes d'obturateurs, susceptibles de se déplacer à l'intérieur de la cage 2. On peut même envisager un obturateur sous la forme d'un piston sollicité par un ressort, qui remplace ou renforce la flottabilité.

La valve à fente 5 peut être d'une conception tout à fait classique avec une membrane souple 52 qui est percée par une fente 53, par exemple en forme de croix. La membrane 52 est entourée par un anneau de montage 51 destiné à être coincé entre l'embase 21 du corps de cage 20 et la bague 4.

La cage 2 définit ainsi une chambre C, dans laquelle l'obturateur 3 peut se déplacer axialement entre la coiffe 24 et la valve 5.

Comme déjà mentionné, la bague 4 est montée dans la tête 1 et la cage 2 est montée sur la bague 4 en maintenant entre elle la valve à fente 5 et en emprisonnant la bille 3 à l'intérieur de la cage 2. Le dispositif doseur D peut ainsi être monté sur un réservoir de fluide R, comme représenté sur la figure 2. La tête 1 peut par exemple comprendre une bague à visser 11 destinée à venir en prise filetée avec un col fileté R2 du réservoir R. Le réservoir R comprend avantageusement une paroi déformable R1 qu'un utilisateur peut écraser pour mettre le fluide contenu dans le réservoir R sous pression. Ainsi, lorsque l'utilisateur retourne le distributeur de manière à disposer le dispositif doseur D en bas, le fluide contenu dans le réservoir remplit la cage 2 et l'obturateur 3 flotte dans le fluide de manière à remonter pour venir en contact de la coiffe 24. En appuyant sur la paroi déformable R1, un flux de fluide est refoulé à travers la cage 2, entraînant avec lui l'obturateur 3 qui se déplace en direction de la valve à fente 5. En fin de course, l'obturateur 3 obture le dispositif doseur D et la distribution de fluide est alors stoppée. Le fonctionnement du dispositif doseur D est identique à celui décrit dans le document précité EP2746733.

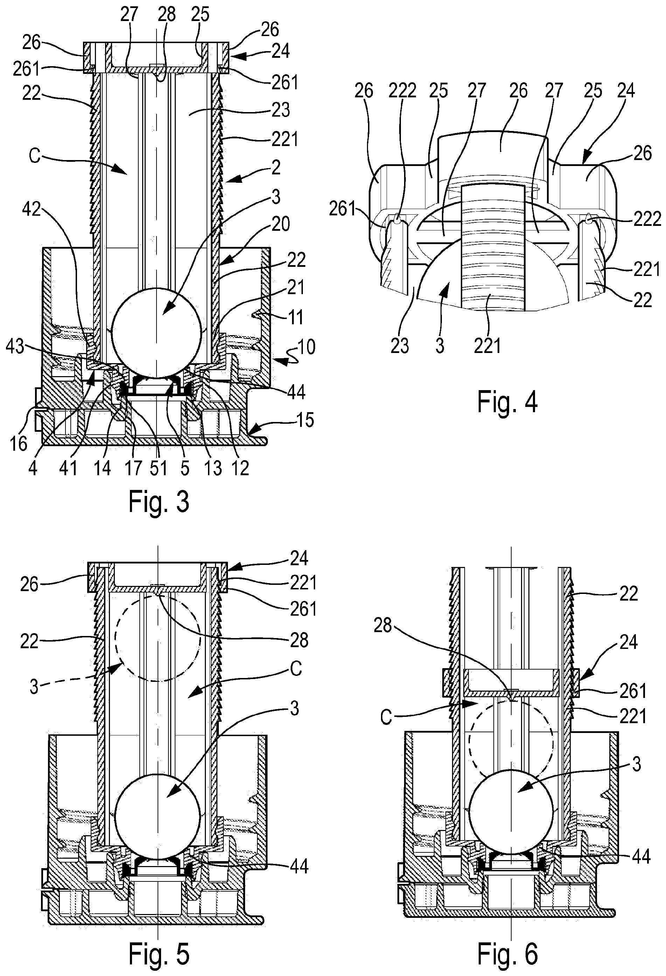

On se référera maintenant aux figures 3 et 4 pour décrire en détail la structure du dispositif doseur D selon ce premier mode de réalisation de l'invention. La tête 1 comprend un corps de tête 10, sur lequel est articulé un capot 15 relié au corps de tête 10 par une charnière 16. Le corps de tête 10 comprend une bague à visser 11 pourvue d'un filetage interne apte à coopérer avec le col fileté R2 du réservoir R de la figure 2. Le corps de tête 10 comprend également une bride de montage 12 qui est formée intérieurement avec un profil d'encliquetage. Le corps de tête 10 forme également un bord annulaire d'appui 13 et une sortie de fluide 14 qui est obturée hermétiquement par une tubulure 17 formée par le capot articulé 15.

La bague 4, comme décrit brièvement ci-dessus, comprend un talon de montage 41 qui est en prise dans la bride de montage 12, avantageusement par encliquetage. La bague 4 comprend également une collerette de montage 42 définissant intérieurement un profil d'encliquetage. En outre, la bague 4 forme un siège annulaire d'étanchéité 44, sur lequel l'obturateur 3 peut venir en contact étanche.

La valve ou clapet à fente 5 est disposé entre la bague 4 et le corps de tête 10 : plus précisément, l'anneau de montage 51 de la valve 5 est maintenu entre le profil d'appui 43 de la bague 4 et le bord annulaire d'appui 13 du corps de tête 10. La membrane souple 52 est libre de se déformer, et même de se retrousser. Sa fente 53 s'ouvre et se ferme en réponse aux variations de pression du fluide.

L'embase 21 du corps de cage 20 est reçue à l'intérieur de la collerette de montage 42 de la bague 4, avantageusement par encliquetage. Il est à noter que la bague 4 peut être montée sur le corps de cage 20 et que l'ensemble peut ensuite être monté sur le corps de tête 10. Dans ce cas, on peut considérer que la bague 4 fait partie intégrante de la cage 2. En variante, la bague 4 peut préalablement être montée sur le corps de tête 10, et le corps de cage 2 peut ensuite être monté dans la bague 4. Dans ce cas, on peut considérer que la bague 4 fait partie intégrante de la tête 1.

A l'état initial, en sortie de moule, la coiffe 24 est située à l'extrémité supérieure des pattes 22 : plus précisément, la coiffe est reliée aux pattes 22 par des ponts de matière sécables 222 issus du moulage. On peut ainsi dire que la coiffe 24 est moulée de manière monobloc avec le corps de cage 20. Ceci est représenté sur la figure 4. On peut également remarquer que la coiffe 24 forme une couronne 25, autour de laquelle les passants 26 sont disposés. Chaque passant 26 forme intérieurement au moins une dent d'encliquetage 261 destinée à venir en prise avec les crans d'encliquetage 221 des pattes 22. En position initiale de moulage, les dents 221 ne sont pas en prise avec les crans 221. La couronne 25 définit intérieurement une lame 27 qui forme une butée 28 orientée vers l'intérieur de la cage 2. De préférence, on peut prévoir deux lames 27 disposées en croix avec la butée 28 disposée à l'intersection des deux lames 27. Il faut surtout remarquer que la coiffe 24 définit une entrée de fluide à travers sa couronne 25 entre les lames 27. D'autres entrées sont également définies au niveau des fentes 23 qui séparent les pattes 22.

La cage 2 avec sa bague 4 définissent ainsi une chambre C dans laquelle l'obturateur 3 est prisonnier, avec toutefois un degré de liberté axial. En effet, l'obturateur 3 peut se déplacer sur une course maximale définie d'une part par la butée 28 et d'autre part par le siège d'étanchéité 44. Une distance de course est ainsi définie entre la butée 28 et le siège 44. Sur la figure 3, l'obturateur 3 est représenté en contact avec le siège 44, correspondant à l'état du dispositif doseur en l'absence de fluide ou sous l'action d'un flux de fluide traversant. Sur la figure 4, l'obturateur 3 est disposé en contact de la butée 28, correspondant à un état du dispositif doseur plongé dans un fluide en l'absence de flux de fluide traversant.

A partir de la configuration représentée sur la figure 3, on comprend aisément qu'il est possible de déplacer axialement la coiffe 24 sur les pattes 22, après rupture des ponts de matière 222 qui les reliaient ensemble initialement. Très rapidement, les dents 261 des passants 26 vont venir en prise encliquetée avec les crans 221 des pattes 22. Ceci est représenté sur la figure 5. Les dents 261 sont ici en prise avec la première rangée de crans 221 des pattes 22. Cette configuration correspond à une distance de course maximale séparant la butée 28 du siège 44. L'obturateur 3 est représenté en contact du siège 44, mais également en pointillés en contact de la butée 28. On peut ainsi visualiser sur la figure 5 les deux positions extrêmes de la course de l'obturateur 3.

Sur la figure 6, on peut voir que la coiffe 24 a été déplacée axialement vers le bas le long des pattes 22, de manière à réduire considérablement la distance de course séparant la butée 28 du siège 44. Cette configuration ne définit toutefois pas la distance de course minimale, puisque l'on peut voir qu'il y a encore des crans 221 en-dessous de la coiffe 24.

On comprend alors que le réglage de la distance de course, et de ce fait de la course de l'obturateur 3, se fait très simplement en disposant la coiffe 24 à la hauteur axiale souhaitée le long des pattes crantées 22. Ainsi, la dose de fluide distribuée peut être ajustée en fonction de la nature et des caractéristiques du fluide. Le positionnement final souhaité de la coiffe 24 peut être réalisé directement à la sortie du moule, en usine, avant le montage du dispositif doseur D sur le réservoir R. La coiffe 24, qui fait office d'organe mobile des moyens de réglage, est entièrement disposée dans le réservoir R, de sorte qu'elle n'est pas accessible de l'extérieur du distributeur et ne peut donc pas être manipulée par un utilisateur.

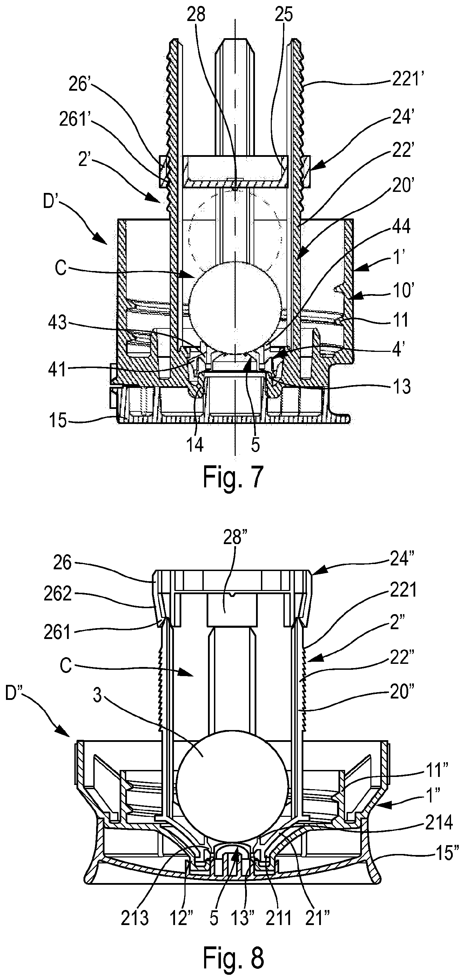

La figure 7 représente un second mode de réalisation de l'invention qui se différencie du premier essentiellement par deux aspects. Premièrement, la coiffe 24' est ici vissée sur les pattes 22', et non plus encliquetée. Pour ce faire, les passants 26' définissent intérieurement des filets 261' et les pattes 22' définissent extérieurement un filetage 221'. Ceci mis à part, le déplacement axial de la coiffe 24' reste sensiblement identique à celui de la coiffe 24 du premier mode de réalisation. Deuxièmement, le corps de cage 20' est ici réalisé de manière monobloc avec le corps de tête 10', qui peut par ailleurs être sensiblement être identique à celui du premier mode de réalisation. Du fait de cette réalisation monobloc, la bague 4' ne comprend pas de collerette de montage, mais reste autrement en tout point identique à la bague 4 du premier mode de réalisation.

La figure 8 montre un troisième mode de réalisation qui se distingue principalement des deux précédents par l'absence de bague 4 ou 4'. En effet, l'embase 21" du corps de cage 20" définit dans sa partie inférieure un profil d'encliquetage 211 qui est en prise encliquetée dans une bride de montage 12" faisant partie intégrante de la tête 1". Le corps de cage 20" forme également un profil d'appui 213 qui maintient la valve à fente 5 sur un bord annulaire d'appui 13" formé par la tête 1". Enfin, le corps de cage 20" forme un siège d'appui annulaire 214, contre lequel l'obturateur 3 peut venir en appui étanche.

Hormis l'absence de bague 4 et la configuration particulière de l'embase 21", les autres fonctionnalités du dispositif doseur sont sensiblement les mêmes. La coiffe 24" comprend une butée 28" et des passants 26 forment des dents 261 au bout de pattes élastiques 262. Les dents 261 sont destinées à coopérer avec les crans 221 formés sur la paroi extérieure des pattes 22".

Dans ce mode de réalisation, l'obturateur 3 doit être disposé à l'intérieur du corps de cage 20" avant de rapporter la coiffe 24". La cage 2" ainsi constituée peut alors être montée dans la tête 1" en coinçant entre elles la valve ou clapet à fente 5. Le réglage de la distance de course s'effectue de la même manière que dans les modes de réalisation précédents, à savoir en déplaçant la coiffe 24" jusqu'à la hauteur axiale souhaitée le long de la partie crantée des pattes 22".

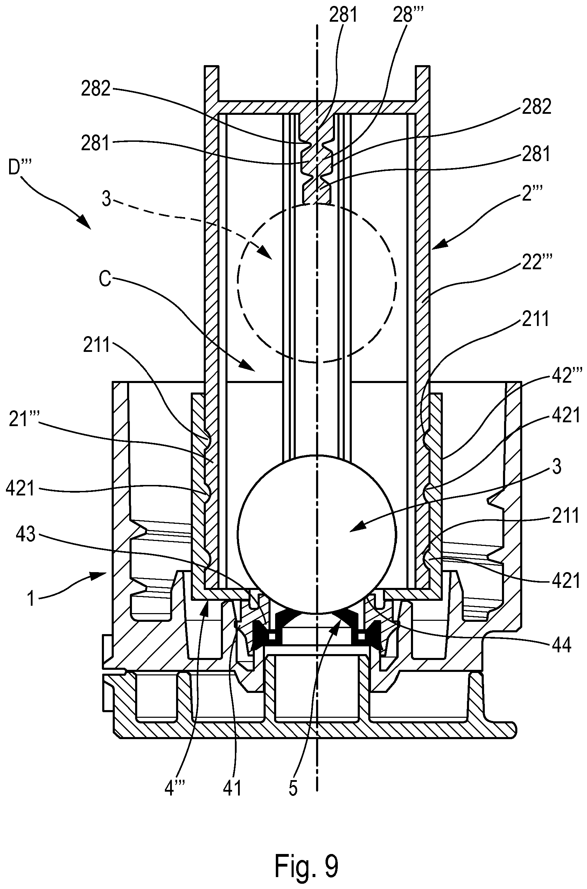

Sur la figure 9, on voit un dispositif doseur D"' selon un quatrième mode de réalisation de l'invention. La tête 1, l'obturateur 3 et le clapet à fente 5 peuvent être identiques à ceux du premier mode de réalisation. La bague 4‴ se distingue des autres bagues déjà décrites en ce que la collerette de montage 42 a été prolongée et se présente maintenant sous la forme d'un manchon de montage 42"' définissant intérieurement plusieurs profils d'encliquetage 421 disposés à des hauteurs axiales différentes. Quant à la cage 2"', elle comprend une embase 21‴ qui forme extérieurement plusieurs logements d'encliquetage 211, destinées à coopérer avec les profils 421 du manchon 42"'. Sur la figure 9, on a représenté trois profils 421 et trois logements 211. L'embase 21‴ est engagée à fond à l'intérieur du manchon 42‴. On peut cependant comprendre que l'embase 21‴ peut être engagée moins profondément à l'intérieur du manchon 42"', tout en assurant l'engagement des profils 421 dans des logements 211. Ainsi, l'engagement de la cage 2'" dans le manchon 42"' à des hauteurs axiales différentes permet d'ajuster la distance de course.

Cumulativement ou en variante, la cage 2‴ forme également une butée 28‴, dont l'étendue axiale est ajustable. Plus précisément, la butée 28‴ comprend plusieurs segments 281 reliés par des amorces de rupture ou de pliage 282. De cette manière, il est possible de retirer ou de plier un ou plusieurs segment(s) 281, de manière à réduire la hauteur axiale de la butée 28‴.

Le manchon 42"' et la butée 28‴ peuvent être mises en œuvre ensemble ou séparément. Lorsqu'ils sont mis en œuvre ensemble, cela permet d'augmenter considérablement les possibilités de réglage de la distance de course.

Il faut noter que les moyens de l'invention permettant de régler la distance de course, et de ce fait la course de l'obturateur 3, n'ont pas généré la mise en œuvre de pièces supplémentaires, puisque la coiffe de réglage 24 peut être réalisée de manière monobloc avec le corps de cage et que le manchon 42"' ne résulte que du prolongement axial de la collerette de montage 42. Il en est de même pour la butée ajustable 28"'.

Dans tous les modes de réalisation qui viennent d'être décrits, il faut noter que les moyens de réglage sont toujours situés dans le réservoir de fluide, en étant inaccessibles de l'extérieur du distributeur de produit fluide, de sorte qu'ils ne peuvent plus être manipulés une fois le distributeur assemblé. En d'autres termes, un utilisateur du distributeur ne peut pas actionner les moyens de réglage de l'invention, sauf à le démonter, c'est-à-dire séparer le dispositif doseur du réservoir.

Grâce à l'invention, on obtient un dispositif doseur dont la dose est très facilement ajustable en usine en fonction du fluide à distribuer, avant l'assemblage définitif du distributeur.

## Revendications

1. Distributeur de produit fluide comprenant un réservoir de produit fluide (R) et dispositif doseur (D ; D' ; D" ; D"') de produit fluide monté sur le réservoir de fluide (R), le dispositif doseur (D ; D' ; D" ; D"') comprenant :
- une chambre (C) définissant une entrée (25, 23), une butée (28 ; 28" ; 28"'), une sortie (14) et un siège d'étanchéité (44 ; 21"), la butée (28 ; 28" ; 28"') étant séparée du siège d'étanchéité (44 ; 21") par une distance de course,
- un obturateur (3) déplaçable dans la chambre (C) sur une course définie entre une position de repos, dans laquelle l'obturateur (3) est sollicité par une force de rappel vers la butée (28 ; 28" ; 28‴), et une position extrême, dans laquelle l'obturateur (3) est sélectivement entrainé vers le siège d'étanchéité (44 ; 21") à l'encontre de la force de rappel par le fluide circulant dans la chambre (C) de l'entrée (25, 23) vers la sortie (14),
- des moyens de réglage (24 ; 24' ; 24" ; 21‴ ; 28"') de la course de l'obturateur (3) aptes à ajuster la distance de course séparant la butée (28 ; 28" ; 28"') du siège d'étanchéité (44 ; 21"),
**caractérisé en ce que** les moyens de réglage (24 ; 24' ; 24" ; 21‴ ; 28"') sont situés à l'intérieur du distributeur, de sorte qu'ils sont inaccessibles de l'extérieur du distributeur de produit fluide.

2. Distributeur selon la revendication 1, dans lequel les moyens de réglage (24 ; 24' ; 24" ; 21‴ ; 28"') sont entièrement situés à l'intérieur du distributeur, et avantageusement à l'intérieur du réservoir de fluide, de sorte qu'un utilisateur ne puisse pas les manipuler.

3. Distributeur selon la revendication 1 ou 2, dans lequel la chambre (C) est formée par au moins deux pièces (20, 24 ; 20', 24' ; 20" ; 24" ; 21‴, 42"') rapportées l'une sur l'autre et définissant entre elles plusieurs positions d'assemblage possibles correspondant à des distances de course différentes.

4. Distributeur selon la revendication 3, dans lequel la chambre (C) comprend une cage (2 ; 2' ; 2" ; 2"') formant l'entrée (25, 23) et la butée (28 ; 28" ; 28"'), et une tête (1 ; 1' ; 1") formant la sortie (14), la cage (2 ; 2' ; 2" ; 2"') étant solidaire de la tête (1 ; 1' ; 1").

5. Distributeur selon la revendication 4, dans lequel la cage (2 ; 2' ; 2") comprend un corps de cage (20 ; 20' ; 20") et une coiffe de cage (24 ; 24' ; 24"), le corps (20 ; 20' ; 20") et la coiffe (24 ; 24' ; 24") définissant entre eux plusieurs positions d'assemblage possibles correspondant à des distances de course différentes.

6. Distributeur selon la revendication 5, dans lequel le corps (20 ; 20") forme des crans d'encliquetage (221) et la coiffe (24 ; 24") forme des dents d'encliquetage (261) aptes à venir en prise encliquetée avec les crans d'encliquetage (221).

7. Distributeur selon la revendication 5, dans lequel le corps (20') forme un filetage (221') et la coiffe (24') forme des filets (261') aptes à venir en prise filetée avec le filetage (221').

8. Distributeur selon la revendication 5, 6 ou 7, dans lequel la coiffe (24 ; 24' ; 24") forme la butée (28 ; 28" ; 28"').

9. Distributeur selon la revendication 5, 6, 7 ou 8, dans lequel le corps de cage (20) et la coiffe de cage (24) sont réalisés de manière monobloc avec des ponts de matière sécables (222).

10. Distributeur selon la revendication 5, 6, 7 ou 8, dans lequel le corps de cage (20') et la tête (1') sont réalisés de manière monobloc.

11. Distributeur selon l'une quelconque des revendications 5 à 10, dans lequel la coiffe de cage (24 ; 24' ; 24") est entièrement disposée dans le réservoir de produit fluide (R).

12. Distributeur selon la revendication 4, dans lequel la cage (2') et la tête (1') définissent entre elles plusieurs positions d'assemblage possibles correspondant à des distances de course différentes.

13. Distributeur selon l'une quelconque des revendications précédentes, comprenant une bague (4 ; 4' ; 4") qui forme le siège d'étanchéité (44).

14. Distributeur selon la revendication 4 ou 13, comprenant en outre une valve à fente (5), maintenue en place par la cage (2") qui forme avantageusement le siège d'étanchéité (21") ou par une bague (4 ; 4' ; 4"') qui forme avantageusement le siège d'étanchéité (44).

15. Distributeur selon l'une quelconque des revendications précédentes, dans lequel la butée (28"') de la chambre (C) est formée avec au moins une amorce de rupture (282), au niveau de laquelle la butée (28"') peut être cassée, permettant ainsi d'augmenter la distance de course.

## Patentansprüche

1. Spender für fluides Produkt, umfassend einen Behälter für fluides Produkt (R) und eine am Fluid-Behälter (R) angebrachten Dosiervorrichtung (D; D'; D"; D"') für fluides Produkt, wobei die Dosiervorrichtung (D; D'; D"; D‴) umfasst:
- eine Kammer (C), die einen Einlass (25, 23), einen Anschlag (28; 28"; 28‴), einen Auslass (14) und einen Dichtsitz (44; 21") definiert, wobei der Anschlag (28; 28"; 28"') vom Dichtsitz (44; 21") durch einen Wegabstand getrennt ist,
- einen Verschluss (3), der in der Kammer (C) auf einem definierten Weg zwischen einer Ruhestellung, in der der Verschluss (3) durch eine Rückstellkraft zum Anschlag (28; 28"; 28‴) hin beansprucht wird, und einer Endstellung, in der der Verschluss (3) durch das in der Kammer (C) vom Einlass (25, 23) zum Auslass (14) strömende Fluid gegen die Rückstellkraft selektiv zum Dichtsitz (44; 21") bewegt wird,
- Mittel (24; 24'; 24"; 21‴; 28‴) zum Einstellen des Weges des Verschlusses (3), die geeignet sind, den Wegabstand einzustellen, der den Anschlag (28; 28"; 28"') vom Dichtsitz (44; 21") trennt,
**dadurch gekennzeichnet, dass** sich die Einstellmittel (24; 24'; 24"; 21‴; 28‴) im Inneren des Spenders befinden, so dass sie von außerhalb des Spenders für fluides Produkt unzugänglich sind.

2. Spender nach Anspruch 1, wobei sich die Einstellmittel (24; 24'; 24"; 21‴; 28‴) vollständig im Inneren des Spenders und in vorteilhafter Weise im Inneren des Fluidbehälters befinden, so dass sie ein Benutzer nicht beeinflussen kann.

3. Spender nach Anspruch 1 oder 2, wobei die Kammer (C) von mindestens zwei Teilen (20, 24; 20', 24'; 20"; 24"; 21‴, 42"') gebildet ist, die aufeinander angebracht sind und zwischen sich mehrere mögliche Montagepositionen definieren, die unterschiedlichen Wegabständen entsprechen.

4. Spender nach Anspruch 3, wobei die Kammer (C) einen Käfig (2; 2'; 2"; 2"), der den Einlass (25, 23) und den Anschlag (28; 28"; 28"') bildet, und einen Kopf (1; 1'; 1") umfasst, der den Auslass (14) bildet, wobei der Käfig (2; 2'; 2"; 2‴) mit dem Kopf (1; 1'; 1") fest verbunden ist.

5. Spender nach Anspruch 4, wobei der Käfig (2; 2'; 2") einen Käfigkörper (20; 20'; 20") und eine Käfigkappe (24; 24'; 24") umfasst, wobei der Körper (20; 20'; 20") und die Kappe (24; 24'; 24") zwischen sich mehrere mögliche Montagepositionen definieren, die unterschiedlichen Wegabständen entsprechen.

6. Spender nach Anspruch 5, wobei der Körper (20; 20") Rastnasen (221) bildet und die Kappe (24; 24") Rastzähne (261) bildet, die mit den Rastnasen (221) in Rasteingriff bringbar sind.

7. Spender nach Anspruch 5, wobei der Körper (20') ein Gewinde (221') bildet und die Kappe (24') Gewindegänge (261') bildet, die mit dem Gewinde (221') in Gewindeeingriff bringbar sind.

8. Spender nach Anspruch 5, 6 oder 7, wobei die Kappe (24; 24'; 24") den Anschlag (28; 28"; 28‴) bildet.

9. Spender nach Anspruch 5, 6, 7 oder 8, wobei der Käfigkörper (20) und die Käfigkappe (24) einteilig mit trennbaren Materialbrücken (222) ausgebildet sind.

10. Spender nach Anspruch 5, 6, 7 oder 8, wobei der Käfigkörper (20') und der Kopf (1') einteilig ausgebildet sind.

11. Spender nach einem der Ansprüche 5 bis 10, wobei die Käfigkappe (24; 24'; 24") vollständig im Behälter für fluides Produkt (R) angeordnet ist.

12. Spender nach Anspruch 4, wobei der Käfig (2') und der Kopf (1') zwischen sich mehrere mögliche Montagepositionen definieren, die unterschiedlichen Wegabständen entsprechen.

13. Spender nach einem der vorstehenden Ansprüche, umfassend einen Ring (4; 4'; 4"), der den Dichtsitz (44) bildet.

14. Spender nach Anspruch 4 oder 13, der ferner ein Schlitzventil (5) umfasst, das durch den Käfig (2"), der in vorteilhafter Weise den Dichtsitz (21") bildet, oder durch einen Ring (4; 4'; 4‴), der in vorteilhafter Weise den Dichtsitz (44) bildet, am Platz gehalten wird.

15. Spender nach einem der vorstehenden Ansprüche, wobei der Anschlag (28‴) der Kammer (C) mit mindestens einer Sollbruchstelle (282) ausgebildet ist, im Bereich welcher der Anschlag (28‴) zerbrochen werden kann, wodurch der Wegabstand vergrößerbar ist.

## Claims

1. A fluid product dispenser comprising a reservoir for fluid product (R) and a metering device (D; D'; D"; D‴) for fluid product mounted on the fluid reservoir (R), the dispensing device (D; D'; D"; D‴) comprising:
- a chamber (C) defining an inlet (25, 23), an abutment (28; 28"; 28‴), an outlet (14) and a sealing seat (44; 21"), the abutment (28; 28"; 28‴) being separated from the sealing seat (44; 21") by a stroke distance,
- a shutter (3) which can be displaced in the chamber (C) over a stroke defined between a rest position, in which the shutter (3) is biassed towards the abutment (28; 28"; 28‴) by a restoring force, and an extreme position, in which the shutter (3) is selectively urged towards the sealing seat (44; 21") against the restoring force by the fluid circulating in the chamber (C) from the inlet (25, 23) towards the outlet (14),
- means (24; 24'; 24"; 21‴; 28‴) for adjusting the stroke of the shutter (3) which are capable of adjusting the stroke distance separating the abutment (28; 28"; 28‴) from the sealing seat (44; 21"),
**characterized in that** the adjustment means (24; 24'; 24"; 21‴; 28‴) are located inside the dispenser in a manner such that they are inaccessible from the exterior of the fluid product dispenser.

2. The dispenser as claimed in claim 1, in which the adjustment means (24; 24'; 24"; 21‴; 28‴) are entirely located inside the dispenser, and advantageously inside the fluid reservoir, in a manner such that a user cannot manipulate them.

3. The dispenser as claimed in claim 1 or claim 2, in which the chamber (C) is formed by at least two parts (20, 24; 20', 24'; 20"; 24"; 21‴, 42‴) attached to each other and between them defining several possible assembly positions corresponding to different stroke distances.

4. The dispenser as claimed in claim 3, in which the chamber (C) comprises a cage (2; 2'; 2"; 2‴) forming the inlet (25, 23) and the abutment (28; 28"; 28‴), and a head (1; 1'; 1") forming the outlet (14), the cage (2; 2'; 2"; 2‴) being integral with the head (1; 1'; 1").

5. The dispenser as claimed in claim 4, in which the cage (2; 2'; 2") comprises a cage body (20; 20'; 20") and a cage cap (24; 24'; 24"), the body (20; 20'; 20") and the cap (24; 24'; 24") between them defining several possible assembly positions corresponding to different stroke distances.

6. The dispenser as claimed in claim 5, in which the body (20; 20") forms snap fitting notches (221) and the cap (24; 24") forms snap fitting teeth (261) which are capable of coming into snap fitting engagement with the snap fitting notches (221).

7. The dispenser as claimed in claim 5, in which the body (20') forms a screw thread (221') and the cap (24') forms threads (261') which are capable of coming into threaded engagement with the screw thread (221').

8. The dispenser as claimed in claim 5, claim 6 or claim 7, in which the cap (24; 24'; 24") forms the abutment (28; 28"; 28‴).

9. The dispenser as claimed in claim 5, claim 6, claim 7 or claim 8, in which the cage body (20) and the cage cap (24) are produced as a single piece with bridges of breakable material (222).

10. The dispenser as claimed in claim 5, claim 6, claim 7 or claim 8, in which the cage body (20') and the head (1') are produced as a single piece.

11. The dispenser as claimed in any one of claims 5 to 10, in which the cage cap (24; 24'; 24") is entirely disposed in the fluid product reservoir (R).

12. The dispenser as claimed in claim 4, in which the cage (2') and the head (1') between them define several possible assembly positions corresponding to different stroke distances.

13. The dispenser as claimed in any one of the preceding claims, comprising a ring (4; 4'; 4") which forms the sealing seat (44).

14. The dispenser as claimed in claim 4 or claim 13, further comprising a slit valve (5), held in place by the cage (2") which advantageously forms the sealing seat (21") or by a ring (4; 4'; 4‴) which advantageously forms the sealing seat (44).

15. The dispenser as claimed in any one of the preceding claims, in which the abutment (28‴) of the chamber (C) is formed with at least one line of weakness (282), at the level of which the abutment (28‴) can be broken, thereby enabling the stroke distance to be increased.
